(19) Europäisches Patentamt / European Patent Office / Office européen des brevets

(11) **EP 2 903 896 B1**

(12) **EUROPEAN PATENT SPECIFICATION**

(45) Date of publication and mention
of the grant of the patent:
**19.02.2020   Bulletin 2020/08**

(51) Int Cl.:
***B64F 1/00*** (2006.01)

(21) Application number: **13811587.8**

(22) Date of filing: **04.10.2013**

(86) International application number:
**PCT/GB2013/000418**

(87) International publication number:
**WO 2014/053801 (10.04.2014 Gazette 2014/15)**

(54) **RUNWAY ARRANGEMENT**

LANDEBAHNANORDNUNG

AGENCEMENT DE PISTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.10.2012  GB 201217812**

(43) Date of publication of application:
**12.08.2015   Bulletin 2015/33**

(60) Divisional application:
**20150476.8**

(73) Proprietor: **Runway Innovations Limited
Wimbledon, London SW19 7JY (GB)**

(72) Inventors:
• **LOWE, William Dennis
Marlow
Buckinghamshire SL7 1SQ (GB)**
• **LONERGAN, Peter
Weybridge
Surrey KT13 8XJ (GB)**
• **COSTELLO, Steven Dennis John
Weybridge
Surrey KT13 8XJ (GB)**
• **BOSTOCK, Richard Mark
London EC2Y 8HD (GB)**

(74) Representative: **Cozens, Paul Dennis et al
Mathys & Squire LLP
The Shard
32 London Bridge Street
London SE1 9SG (GB)**

(56) References cited:
**DE-A1- 10 013 946     US-A1- 2009 043 487**

## Description

<u>Field of invention</u>

This invention relates to runway arrangements, specifically runway arrangements for commercial passenger airports.

<u>Background</u>

Airport capacity (the number of aircraft able to land and/or take off per hour) is often limited by the size, number and configuration of the runways. For safety reasons, there has to be a certain time and distance separation between aircraft landing and/or taking off on the same runway. Often, multiple runways are used; designated either for landing, take-off or mixed mode (where runways are used for both take-offs and landings in turn). This increases airport capacity, but multiple runways need to be spaced sufficiently apart so as not to interfere with one another and to comply with regulatory and safety requirements. In urban or other constrained environments, adequate space for an additional runway may not be readily available, and/or the noise footprint from aircraft using a new runway may not be acceptable. Furthermore, the added time and fuel incurred by taxiing aircraft to a runway further from the terminal may add to the operating cost and $CO_2$ emissions of the flight.

US2009/0043487 A1 in the name of Gellert relates to a Safe Runway Aircraft Arrival and Departure System Using Split Runway Design comprising a linear runway divided into separate landing strip and takeoff strip portions. Arriving aircraft land on the designated landing strip portion of the runway, while departing aircraft take off from the designated takeoff strip portion of the runway. The landing and takeoff portions may be separated by a defined buffer zone utilized by aircraft for taxiing to and from a terminal. Existing runways may be readily converted into two designated portions for arriving and departing aircraft, thereby significantly increasing the number of aircraft arrival and departure sequences, reducing the likelihood of aircraft runway incursions, eliminating dangerous intersection takeoffs, and conserving jet fuel.

<u>Summary</u>

According to the present invention there is provided an airport runway arrangement for commercial aircraft, comprising a first runway section; a second runway section extending substantially in prolongation of the first runway section; the second runway section having the same direction of operation as that of the first runway section; and an intermediate section, typically an intermediate safety section, between the first and second runway sections; wherein the first runway, second runway and intermediate sections are designated by at least one of lights, markings and reflectors on said runway arrangement, said first and second sections being designated as runway sections and the intermediate section being designated b as an intermediate safety area, said designation indicating that the intermediate section is not to be used by aircraft during normal operations. Thereby, simultaneously, a landing aircraft is allowed to land on one of said first and second runway sections, and a departing aircraft to take off from the other of said first and second runway sections, whilst not using the intermediate section.

Preferably the first runway section is designated a landing runway section and the second runway section is designated a take-off runway section.

Preferably the runway arrangement further comprises a safety area at the ends of each take-off runway section.

Preferably the runway arrangement further comprises a safety area at the start of each landing section.

Preferably there is provided a pair of runway arrangements each as aforesaid.

Preferably the pair of runways is separated by at least 1035m.

Preferably the runway arrangement further comprises a third runway section.

Preferably the runway arrangement further comprises a fourth additional runway section extending substantially in prolongation of the third runway section.

Preferably the first and second runway sections have opposing directions of operation.

Preferably the third and fourth runway sections have opposing directions of operation.

Preferably the directions of operation of the first and second runway sections are switchable.

Preferably the directions of operation of the third and fourth runway sections are switchable.

Preferably the third runway section is adjacent the first runway section.

Preferably the fourth runway section is adjacent the second runway section.

Preferably the first and third runway sections are contiguous and the second and fourth runway sections are contiguous.

Preferably the third and fourth runway sections are designated as take-off runway sections.

Preferably the first and second runway sections are designated landing runway sections.

Preferably the directions of operation of the first and second runway sections are towards each other and preferably towards the or each intermediate section.

Preferably the third and fourth runway sections have a common section configured to be usable in either direction of operation.

Preferably there is provided a pair of runway arrangements each as aforesaid.

Preferably the runway sections on the outside of the pair are designated as landing runway sections.

Preferably the runway sections on the inside of the pair are designated as take-off runway sections.

Preferably the pair of runways is separated by at least 1035m.

Preferably each runway section is between 1000m and 8000m long.

Preferably the first and second runway sections are substantially the same length.

Preferably each runway section is between 2500m and 3500m in length.

Preferably each runway section is between 2000m and 4000m in length.

Preferably the first and second runway sections are of different lengths.

Preferably one runway section is between 1000m and 2500m long and the other runway section between 2500m and 4000m long.

Preferably the intermediate sections, or one of them, are at least 200m in length, preferably between 240m and 600m in length, and preferably less than 1500m in length.

Preferably the intermediate sections, or one of them, are at least 175m or 180m in length, and preferably less than 1500m in length.

Preferably the safety sections, or one of them, are at least 200m in length, preferably between 240m and 300m or 600m in length, and preferably less than 1500m in length.

Preferably the intermediate sections and/or safety sections, or one of them, are variable, for example as to length or location.

Preferably the intermediate sections and/or safety sections, or one of them, are movable.

Preferably an intermediate section is variable such that its location can be changed to be adjacent its previous location, for example in order to extend landing or take off length. The variation of the intermediate section may take the form of pilot notification and/or varying lighting on the runway. The runway may be marked with both locations of the intermediate section.

Two (or more) intermediate sections (each of which may be variable) may be provided per runway, at different locations, one for each direction of operation.

Preferably the or each intermediate section and/or safety section is movable and/or variable in dependence of the type of departing and/or landing aircraft, jet blast effects, aircraft performance effects and/or obstacle limitation surfaces associated with the departing and/or landing aircraft.

Preferably the or each intermediate section and/or safety section is free of on-ground aircraft and/or is unavailable for aircraft taxiing.

Preferably the or each intermediate section is unavailable for use by aircraft to manoeuvre or be manoeuvred across the runway.

Preferably, the or each intermediate safety section is removable, for example in the event that the entire runway is used for an aircraft manoeuvre (such as take-off or landing).

In another aspect there is provided an airport runway arrangement comprising a pair of substantially parallel runways, the runways each having a main runway section and an intermediate section adjacent a first end of the main runway section, the intermediate sections of the pair of runways being substantially adjacent each other and laterally offset from one another, and each main runway section extending away from the intermediate section towards a second end thereof in an opposite direction from the other runway.

Preferably the majority of the main runway sections are not adjacent each other.

Preferably the main runway sections have different lengths.

Preferably each substantially parallel runway further comprises an additional runway section extending from the intermediate section in the opposite direction to the main runway.

Preferably the additional runways are designated for use in the opposing direction to the main runways, when the main runways are not in use.

Preferably the intermediate sections are contiguous.

Preferably the pair of runways is separated by a distance of between 50m - 300m, preferably approximately 190m.

The runway arrangement preferably comprises at least one taxiway adjoining the intermediate section.

Preferably the or each intermediate section and/or safety section is free of on-ground aircraft and/or is unavailable for aircraft taxiing.

Preferably the or each intermediate section is unavailable for use by aircraft to manoeuvre or be manoeuvred across the runway.

The runway arrangement preferably comprises two pairs of runways, as aforesaid, which are substantially parallel to each other.

Preferably the intermediate sections of each pair are substantially laterally aligned.

Preferably the main runway sections on the outer side of each pair extend from the intermediate section in the same direction, and the main runway sections on the inner side of each pair extend from the intermediate section in the same direction.

Preferably the main runway sections on the outer side of each pair are substantially aligned, and the main runway sections on the inner side of each pair are substantially aligned.

Preferably the runways on the outer side of each pair are designated as landing runways, and the runways on the inner side of each pair are designated as take-off runways.

Preferably the designation of the runways as landing runways or take-off runways is switchable.

Preferably a terminal area is situated adjacent the intermediate section.

Preferably an aircraft-parking stand is situated between the pair of parallel runways, possibly adjacent the intermediate section.

Preferably the runway arrangement is for commercial passenger carrying aircraft.

Preferably the runway arrangement is for aircraft operating under civil regulations.

According to another aspect there is provided a method of providing a runway arrangement comprising dividing an existing runway longitudinally into first and second parallel runways; designating a first section of each runway as an intermediate section, and a second part of each runway as the main runway section.

The method preferably comprises extending the length of the runway and/or extending the width of the runway and/or separating the first and second runways.

The method preferably comprises further designating the remainder of each first and second runway as an additional runway.

According to another aspect there is provided a method of providing a runway arrangement as described above and herein comprising widening a central section of the runway to provide an intermediate section, and offsetting the centre line of the runway on each side of the central area such that the centre lines are laterally offset in the intermediate section.

According to another aspect there is provided a runway comprising a designated landing section and a designated take-off section, the sections being separated by an intermediate section.

In one aspect there is provided a runway arrangement comprising a landing threshold which is substantially further along the runway than the start of the runway.

Preferably the landing threshold is between 1km and 5km distal from the start of the landing runway, preferably between 1.5km and 3km, more preferably 2km.

Preferably the position of the landing threshold is adjustable.

In another aspect of the present invention there is provided a method of operating an airport runaway arrangement for commercial aircraft, the method comprising the steps of directing an aircraft to move along a first runway section; directing an aircraft to move along a second runway section; the second runway section having the same direction of operation as that of the first runway section; and providing an intermediate section between the first and second runway sections; indicating, to a pilot, by at least one of lights, markings and reflectors on said runway arrangement, that said first and second sections are runway sections, and that the intermediate section is an intermediate safety area that is not to be used by aircraft during normal operations; and simultaneously landing an aircraft on one of said first and second runway sections, and taking off an aircraft from the other of said first and second runway sections, whilst not using the intermediate section.

Preferably the step of directing an aircraft to move along a first runway section comprises directing an aircraft to land.

In another aspect of the present invention there is provided a system incorporating an airport runway configuration as aforesaid, and further comprising: means for defining the first runway section; means for defining the second runway section; and means for defining the intermediate section.

Preferably the means for defining comprises marking the runway.

Preferably the markings comprise at least one of lights, painted markings and reflectors.

Preferably the means for defining comprises means for communicating the definitions of the sections, optionally to a user such as a pilot or an air traffic controller.

Preferably the means for defining is variable in dependence of the type of departing and/or landing aircraft, jet blast effects, aircraft performance effects and/or obstacle limitation surfaces associated with the departing and/or landing aircraft.

The invention extends to any novel aspects or features described and/or illustrated herein.

Further features of the invention are characterised by the other independent and dependent claims.

Any feature in one aspect of the invention may be applied to other aspects of the invention, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

The invention extends to methods and/or apparatus substantially as herein described with reference to the accompanying drawings in which:

Figure 1 is an example of an existing airport arrangement;
Figures 2 are examples of a runway arrangement according to one embodiment of the invention;
Figures 3 show the operation of a runway arrangement according to another embodiment of the invention;
Figure 4(a) shows the runway arrangement of Figures 3(a) and (c) together;
Figure 4(b) shows the runway arrangement of Figures 3(b) and (d) together;
Figures 5 show steps in an example method of expanding a runway arrangement according to one embodiment of the invention;
Figures 6 show alternative steps of expanding a runway arrangement to that shown in Figure 5(d);
Figures 7 show an example landing approach according to one embodiment of the invention which can be used with the runway arrangements of Figures 2 to 4;
Figures 8 (a) shows another example landing approach which can be used with the runway arrangements of Figures 2 to 4; and
Figure 8(b) shows the landing approaches shown in Figures 7 and 8(a) combined.

Specific description

The term 'runway' used in this description preferably refers to an area designated and certified by the regulatory and safety authorities for use by an aircraft for taking-off and/or landing. Typically, this is a suitably hard surfaced area which is demarcated (i.e. distinct to taxiways etc.) as a runway.

In the description below the term 'longitudinal length' or 'length' preferably refers to the length of the runway along which an aircraft typically moves when landing or taking-off. The term 'lateral width' or 'width' preferably refers to the width of the runway, or group of runways (depending on context), measured perpendicularly to the longitudinal length. Existing commercial airports for passenger carrying aircraft often have two or more runways to increase the capacity over a single runway. The configuration of these runways depends on the layout of the airport terminal(s), the space available, the surrounding geography and the prevailing weather conditions (amongst other factors).

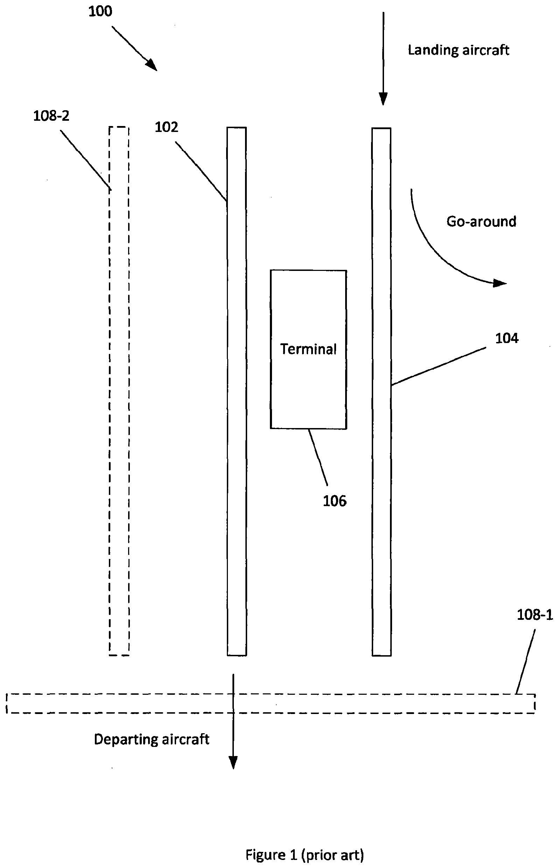

Figure 1 shows an example of an existing airport arrangement 100 using two runways 102, 104. This arrangement is common where the two runways 102, 104 are sufficiently far apart so as not to interfere with one another's operations during normal use, and each runway is close to the terminal 106, or alternatively an aircraft-parking stand. Each runway is often designated as a landing or take-off runway, or as mixed mode where aircraft use the same runway for both landing and taking off in turn, with the aircraft moving in the same direction. Such designations may not be permanent, and, for example, may be dependent on time of day or wind conditions.

Adding a third runway (shown by dotted runways 108) to such an existing arrangement would inevitably either interfere with operations, as shown by runway 108-1, or require a long taxi from the terminal 106 or the aircraft-parking stand, as shown by runway 108-2. This arrangement may also require aircraft to cross runway 102 when taxiing between runway 108-2 and the terminal or aircraft-parking stand. Such arrangements of additional runways may also make 'go-arounds' (where an aircraft aborts approach or landing and loops round for another attempt) more dangerous as the aircraft may have to cross the flight path of other aircraft approaching or departing from the other runways.

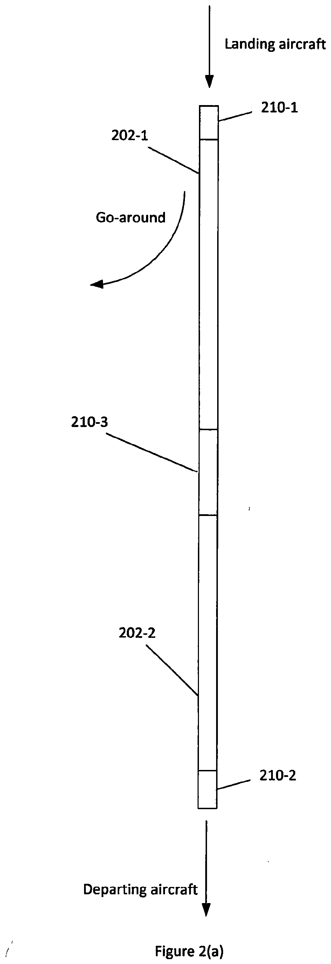

An alternative runway arrangement for commercial, passenger carrying aircraft operating under civil regulations is shown in Figure 2(a) where a single runway is split into two sections 202-1, 202-2 separated by an intermediate area 210-3. In the example shown, the first runway section 202-1 is used as a landing runway and the second runway section 202-2 is used as a take-off runway. The total runway length of this arrangement is longer than those shown in Figure 1 to allow aircraft to simultaneously land and take-off from each section of the runway. Safety areas 210-1 and 210-2 are provided as required by regulatory and safety authorities at each end of the runways (where they may be called Runway End Safety Areas (RESAs)) to reduce the risk of damage to aircraft in the event of an undershoot, overshoot, or excursion from the runway. A similar intermediate safety area 210-3 to fulfil the same purpose (that is, preferably, to reduce the risk of damage to aircraft in the event of an undershoot, overshoot or excursion from the runway, as appropriate, of aircraft) is provided at the boundary between the two sections of runway. As used herein, the term "intermediate safety area" or "intermediate safety section" preferably connotes an area or section of runway that is not used during normal operations, but preferably is only used in the event of an undershoot, overshoot or excursion from the runway, and preferably is not used in the case of a manoeuvre across the runway. Preferably, the intermediate safety section is variable or movable. Preferably, the intermediate safety section is removable, for example in the event that the entire runway is used for an aircraft manoeuvre (such as take-off or landing). Each section of runway is suitably marked so that aircraft pilots can see where the section of runway designated respectively for arriving and departing aircraft starts and finishes. A person skilled in the art would realise that a wide variety of runway markings and lighting that are currently known in the art would be suitable.

A "go-around" is shown in Figure 2 (a) indicating how landing aircraft turn away from the runway in the event of an aborted approach or landing. This occurs at the start of the landing section 202-1 and therefore avoids conflict with departing aircraft.

Figure 2(a) shows equal length runway sections each side of the intermediate safety area. However, the position of the intermediate safety area is not fixed, allowing the length of the runway sections each side to be increased or decreased in length according to operating requirements. Preferably, the safety areas 210 are adjustable with respect to their dimensions and/or positions depending on the wind direction and spatial requirements of landing and departing aircraft.

This runway arrangement can also be used in the opposite direction of operation, i.e. the runway section 202-1 being used as a take-off runway and section 202-2 being used as a landing section. Preferably, in use, the directions of operation of the runway sections 202 are switchable.

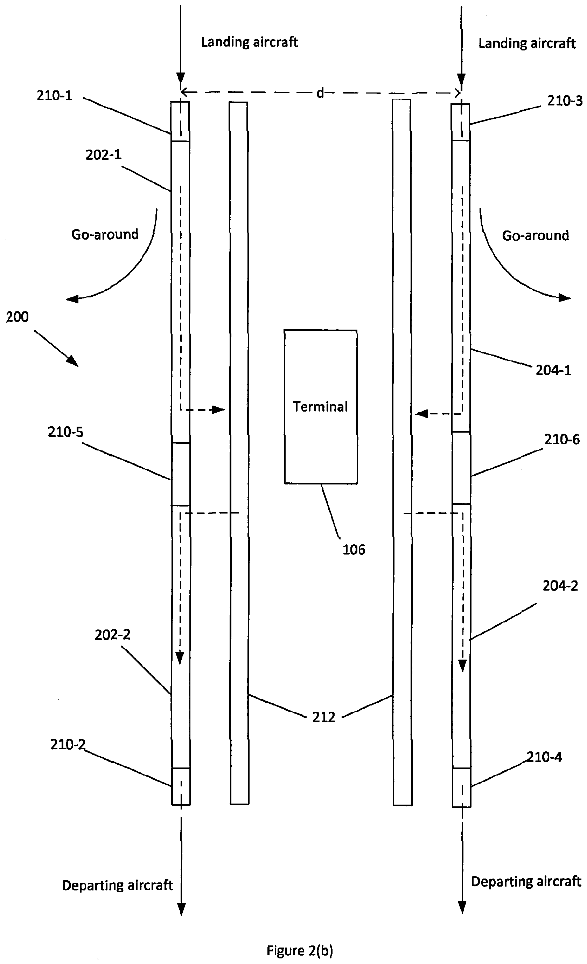

A runway arrangement for commercial, passenger carrying aircraft operating under civil regulations, identified generally by the reference numeral 200, where a pair of runways is provided, is shown in Figure 2(b). In the example shown, the first runway sections 202-1 and 204-1 are used as landing runways and the second runway sections 202-2 and 204-2 are used as take-off runways. The total length of each runway of this arrangement is longer than those shown in Figure 1 to allow aircraft simultaneously to land and take-off from each section of the runway.

Safety areas 210-1, 210-2, 210-3 and 210-4 are provided as required by regulatory and safety authorities at the each end of runway (where they may be called Runway End Safety Areas (RESAs)) to reduce the risk of damage to aircraft in the event of an undershoot, overshoot, or excursion from the runway. A similar intermediate safety area 210-5 and 210-6 to fulfil the same purpose is provided at the boundary between the two sections of runway. Each section of runway is suitably marked so that aircraft pilots can see where the section of runway designated respectively for arriving and departing aircraft starts and finishes. A person skilled in the art would realise that a wide variety of runway markings and lighting that are currently known in the art would be suitable. Preferably, the safety areas 210 are movable/variable by adjusting the associated markings (eg lighting) on the runway. Preferably, the safety areas 210 are sterile under normal operation, in that the areas are free from on-ground aircraft, including any aircraft that are taxiing or being manoeuvred. Preferably the safety areas 210 are free from aircraft that are taxiing or being manoeuvred across the runway.

In one example, one and the same intermediate safety area is used for landing and take-off. If, in an emergency, such as an overshoot, a longer portion of runway is needed, then the intermediate safety area (typically in the form of a set of runway markings, for example lights) is varied so as to designate a longer portion of runway. In one example (with the figures given being approximate to the nearest 5 or 10%), a runway that is 6400m long in total has a 2800m long first runway portion, an intermediate safety area 400m in length and a second runway portion that is 3200m in length. Alternatively, there is a 2600m long first runway portion, an intermediate safety area 600m in length and a second runway portion that is 3200m in length. In a further alternative example, there is a 2800m long first runway portion, an intermediate safety area 600m in length and a second runway portion that is 3000m in length. In each of the above examples, at least two sets of markings are used in order to accommodate adjustments to the length of the runway and/or the direction of operation of the runway arrangement. The take-off runway length is available to be made longer by the length of the intermediate safety area (e.g. an additional length of 600m or 400m as per the above examples) or a portion of the length of the intermediate safety area, since the intermediate safety area is preferably redundant for take-off, but is preferably required for landing. The designation of the intermediate safety area is varied for different directions of operation of the runway arrangement. Preferably, there are at least two intermediate safety areas or four intermediate safety areas in two, preferably contiguous, pairs (for example, one pair for Westward operations and another pair for Eastward operations). Preferably, the intermediate safety area is available to be partitioned into a plurality of component portions so as to allow greater granularity in the adjustment of the intermediate safety area and the length and/or position of runway sections.

Figure 2(b) shows equal length runway sections each side of the intermediate safety area 210-5 and 210-6. However, the position of the intermediate safety area is not fixed, allowing the length of the runway sections each side to be increased or decreased in length according to operating requirements.

A "go-around" is shown for both landing runways in Figure 2(b) indicating how landing aircraft turn away from the runway in the event of an aborted approach or landing. This occurs at the start of the landing sections 202-1 and 204-1 and therefore avoids conflict with departing aircraft.

This runway arrangement can also be used in the opposite direction of operation, i.e. the runway sections 202-1 and 204-1 being used as take-off runways and sections 202-2 and 204-2 being used as landing runways. Reversing the direction of operation of the runways in this way would be particularly advantageous where the wind direction changes or different directions of approach are preferred at different times of day, for example to limit aircraft noise on areas around the airport. Flexibility in the adjustment of the position and/or size of the safety areas 210 helps facilitate dual-direction operation.

Dashed lines show typical aircraft movements on the ground to and from the taxiways 212. A person skilled in the art will appreciate that aircraft ground movements are in reality more complicated than shown but ground movement of arriving and departing aircraft is possible without conflict.

Table 1 below shows dimensions of an example runway arrangement in Figures 2(a) and 2(b):

Table 1 - Example dimensions of elements of a runway arrangement

| Reference numeral | Description | Length |
|---|---|---|
| 202-1, 202-2, 204-1, 204-2 | Runway sections | 2200 - 3200m |
| 210-1, 210-2, 210-3, 210-4 | Runway end safety areas | ≥300m |
| 210-5, 210,6 | Intermediate safety areas | 300-600m |
| d | Runway separation | ≥1035m |

The lengths provided in Table 1 are purely by way of example and depend on various factors such as the type of aircraft that use the runway and the space available. For example, the runway sections may be between 1000m and 8000m long, preferably between 2000m and 4000m in length. Similarly, the dimensions of the RESAs and the intermediate safety areas may be longer or shorter as defined by local regulatory requirements; in one preferred example they are between 240m and 600m in length, but preferably up to 1500m in length. The intermediate safety area is preferably at least 175m, 180m, 200m, 240m, 250m or 300m in length. Furthermore, the runway separation (d) is often defined by local regulations and may be longer or shorter.

By extending the length of existing runways and taxiways at an airport, the arrangements shown in Figures 2(a) and 2(b) can substantially increase capacity without the need to construct entirely new runways which might expose more areas around the airport to aircraft noise. Improving the efficiency of an airport by increasing capacity reduces the need for arriving aircraft to be held in 'stacks' circling whilst waiting for a landing slot, and thus reduces overall $CO_2$ emissions per flight. Furthermore, the runway arrangement shown increases efficiency and capacity, reduces taxiing distances compared to multiple runway layouts, and reduces hold times for aircraft awaiting a take-off slot, which also reduces the $CO_2$ emissions per flight.

The arrangement shown in Figures 2 (a) and (b) may be somewhat limiting in certain examples if regulatory and safety authorities require departing aircraft to wait for a landing aircraft to slow to a safe speed before the departing aircraft is allowed to enter the take-off section of the runway.

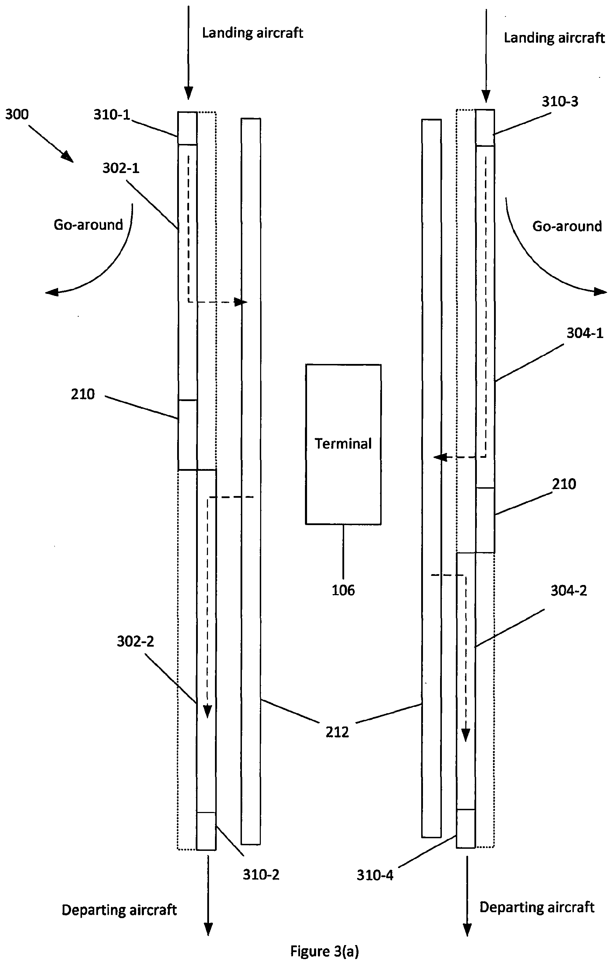

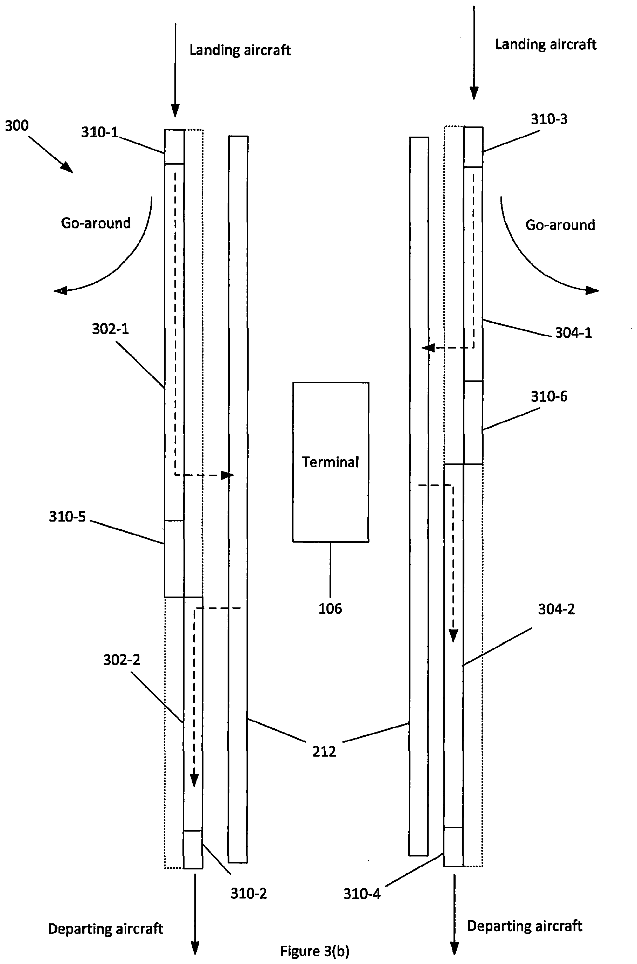

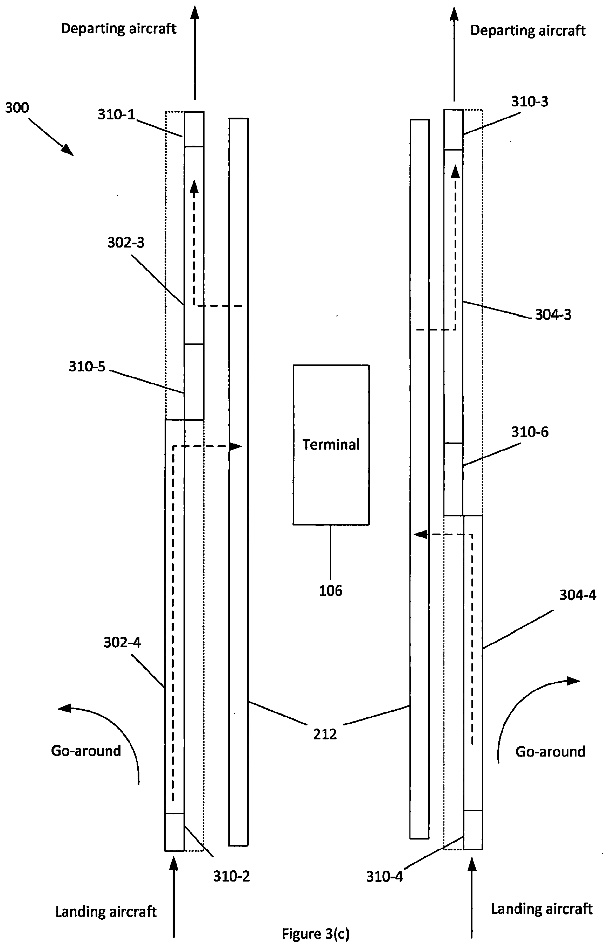

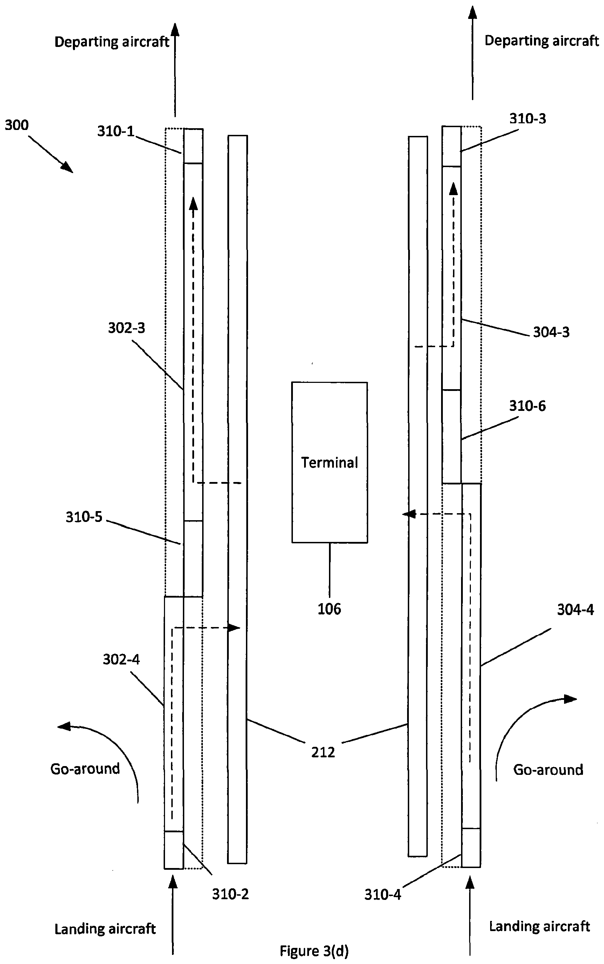

Figures 3 show an alternative embodiment identified generally by the reference numeral 300, where the landing sections 302-1, 304-1 are offset laterally from the respective take off sections 302-2, 304-2. This reduces the risk of any perceived potential conflict between arriving and departing aircraft. The total width of each runway 302, 304 is greater than that of Figures 2 (a) and (b) (say 70m to 170m preferably 85m to 95m, as opposed to 40m to 50m, but in any event as required by the regulatory and safety authorities), whilst runways and taxiway lengths are extended in the same way as those shown in Figures 2.

This arrangement would be particularly advantageous where an existing runway is wider than is required by the regulatory and safety authorities and can be divided longitudinally to provide two contiguous, parallel runways. Alternatively, the existing runway can be widened, to one or both sides, to provide the required width.

Figures 3 (a), (b), (c) and (d) illustrate the ways in which this runway arrangement can be used. Figures 3(a) and (b) illustrate two arrangements when Southerly operations are used and Figures 3(c) and (d) show the corresponding runway arrangements when Northerly operations are used. In one example, a switch in runway operation modality from that shown in Figures 3(a) to 3(c) would represent a change from Southerly to Northerly operations; the designation of the safety areas is adjusted accordingly.

The positions and/or preferably the length of the intermediate safety areas vary as shown by the different arrangements, allowing the length of the runway sections each side to be increased or decreased in length as shown and according to operating requirements. Preferably, the length of the intermediate safety area is dynamically varied in dependence of various factors, including aircraft propulsion blast effects, aircraft performance effects and/or obstacle limitation surfaces (for example, so as to allow a departing aircraft adequate clearance past potential obstacles, such as the tail fin of a ground aircraft). Examples of where different length runways and/or preferably intermediate safety areas would be advantageous is where light / medium aircraft land and take off from shorter sections and large / heavy aircraft land and take off from the longer sections. This arrangement also avoids the problem of smaller aircraft being affected by the vortices produced by large aircraft which have landed / taken off immediately beforehand. The lengths of these sections could be tailored to the exact type of aircraft using the runway arrangement and would not necessarily be permanent. Table 2 shows example dimensions for such a scenario:

Table 2 - Example dimensions of elements of a runway arrangement

| Reference numeral | Runway type | Length |
|---|---|---|
| 302-1 | Landing - large / heavy | 2500 - 4000m |
| 302-2 | Take-off - light / medium | 1000 - 2500m |
| 304-1 | Landing - light / medium | 1000 - 2500m |
| 304-2 | Take-off - large / heavy | 2500 - 4000m |

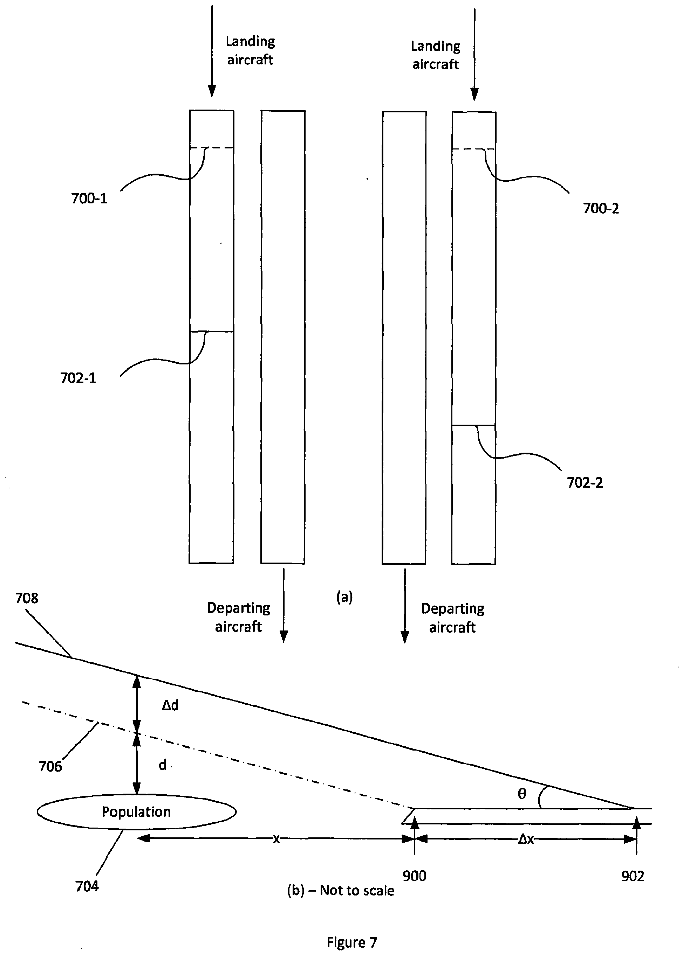

The lengths provided in Table 2 are purely by way of example and depend on various factors such as the type of aircraft that use the runway and the space available. For example, the overall length of each runway 302, 304 may be between 3000m and 8000m, preferably between 4000m and 6000m, more preferably approximately 5400m (excluding intermediate safety areas). In a preferred example the longer runways 302-1,304-2 are substantially 3200m long and the shorter runways 302-2, 304-1 are approximately 2200m long. Preferably, the total length of the runway arrangement is at least 5000m, 6000m, 6400m, 6600m, 6800m or 7000m in length. This may extend the runway arrangement beyond the existing bounds of the airport, possibly into a less densely populated area, which might bring noise advantages as described later in relation to Figure 7.

Safety areas 310-1, 310-2, 310-3 and 310-4 are provided as required by regulatory and safety authorities at each end of the runway (where they may be called Runway End Safety Areas (RESAs)) to reduce the risk of damage to aircraft in the event of an undershoot, overshoot, or excursion from the runway. A similar intermediate safety area 310-5 and 310-6 to fulfil the same purpose is provided at the boundary between the two sections of each runway. Each section of runway is suitably marked so that aircraft pilots can see where the section of runway designated respectively for arriving and departing aircraft starts and finishes. A person skilled in the art would realise that a wide variety of runway markings and lighting that are currently known in the art would be suitable. Preferably, the safety areas 310 are movable by adjusting the associated markings on the runway.

Preferably, the safety areas 210 are sterile under normal operation, in that the areas are free from on-ground aircraft, including any aircraft that are taxiing or manoeuvring, preferably the safety areas 210 being free from aircraft that are taxiing or manoeuvring across the runway.

A "go-around" is shown for both landing runways in Figures 3 (a), (b), (c) and (d) indicating how landing aircraft turn away from the runway in the event of an aborted approach or landing. This occurs at the start of the landing sections 302-1 and 304-1 (Figures 3 (a) and (b)) and landing sections 302-4 and 304-4 (Figures 3 (c) and (d)) and therefore avoids conflict with departing aircraft. The outer pair of runways (302-1 and 304-1 in Figures 3(a) and (b) and 302-4 and 304-4 in Figures 3(c) and (d)) are designated as landing runways to allow aircraft to turn away from the runway without conflicting with departing aircraft on the inner pair of runways.

In Figures 2 and 3 designating areas as safety areas 210 and 310 may comprise physical changes such adding lighting, runway markings and/or software-implemented changes such as alerting pilots and air-traffic controllers to the runway length available via a user interface. These designations may be altered by a user and/or computer system altering the active lighting and/or markings on the runway and making corresponding changes to the user interface display for the pilots and air traffic controllers. Such a system would allow flexibility in the location of intermediate safety areas. Also, in the event of an aircraft needing a much longer runway than usually required, the full length of each runway could be used since the intermediate safety areas, as well as being flexible in location, can also be used as part of the runway if required.

Instrument Landing Systems (ILS), used to aid landing, are typically arranged such that the aerials of the ILS are placed at the distal end of a runway. With reference to Figure 2(a) and 2(b), ILS signal degradation is expected due to the distance between a landing aircraft and the ILS aerial, in addition to potential obstruction from departing aircraft. The offset of runway sections 302-1 and 304-1 from runway sections 302-2 and 304-2 respectively, as shown in Figures 3(a)-(d), allows the ILS aerials to be preferably placed nearer to landing aircraft, immediately beyond the landing runway section (e.g. runway sections 302-1 and 304-1 in Figure 3(a)). In this manner, the ILS aerial has free line-of-sight to landing aircraft, is more proximate to landing aircraft and is safely offset from departing aircraft. To improve safety, preferably fixed, but frangible ILS aerial structures are used so as to prevent damage to aircraft, for example in an aircraft landing incident. Additionally, the ILS aerial is low-lying so as to avoid contact with aircraft wings.

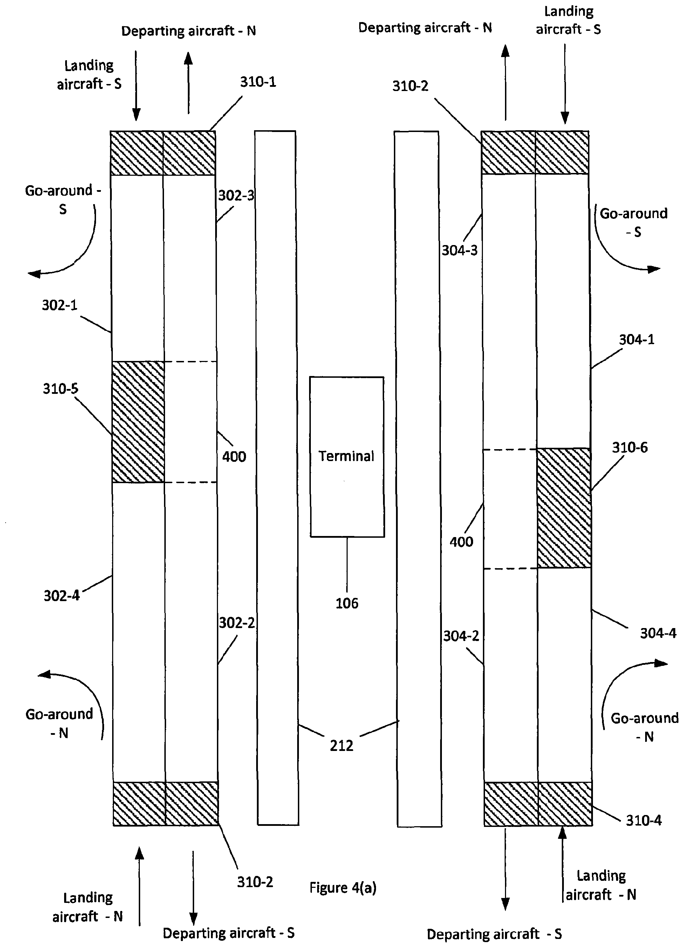

Figure 4(a) shows a runway arrangement as shown in Figures 3(a) and (c) showing both directions of operation. Similar reference numerals refer to similar elements; thus Figure 4(a) is essentially the two directions of operation shown in Figures 3(a) and 3(c) superimposed on one-another. Areas 400 are shown on the take-off runways which are aligned with the intermediate safety areas 310-5, 6. In one example, these areas 400 are not used; aircraft that are taking off to the North start their take-off from the Northern end of the area 400. Similarly, aircraft taking off to the South start their take-off from the Southern end of the area 400. In another example, this section can be used in either direction; i.e. aircraft taking off to the North start their take-off from the Southern end of the area 400 and vice versa. This alternative use would lengthen the effective take-off runway length but may require coordination between aircraft taking off with landing aircraft in certain circumstances.

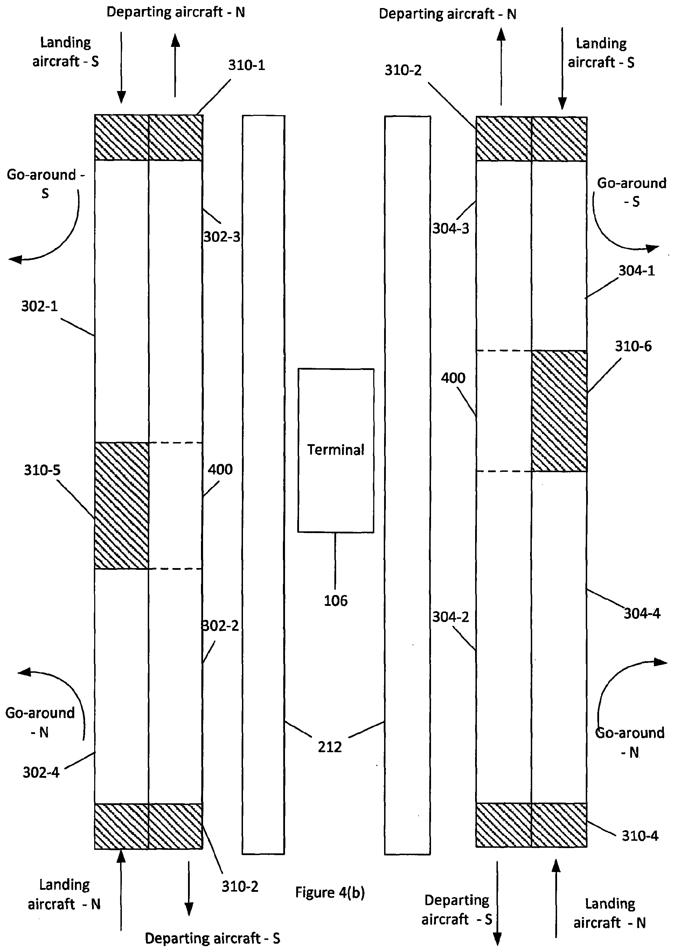

Figure 4(b) shows a similar figure to Figure 4(a), corresponding to the runway arrangement shown in Figures 3(b) and 3(d).

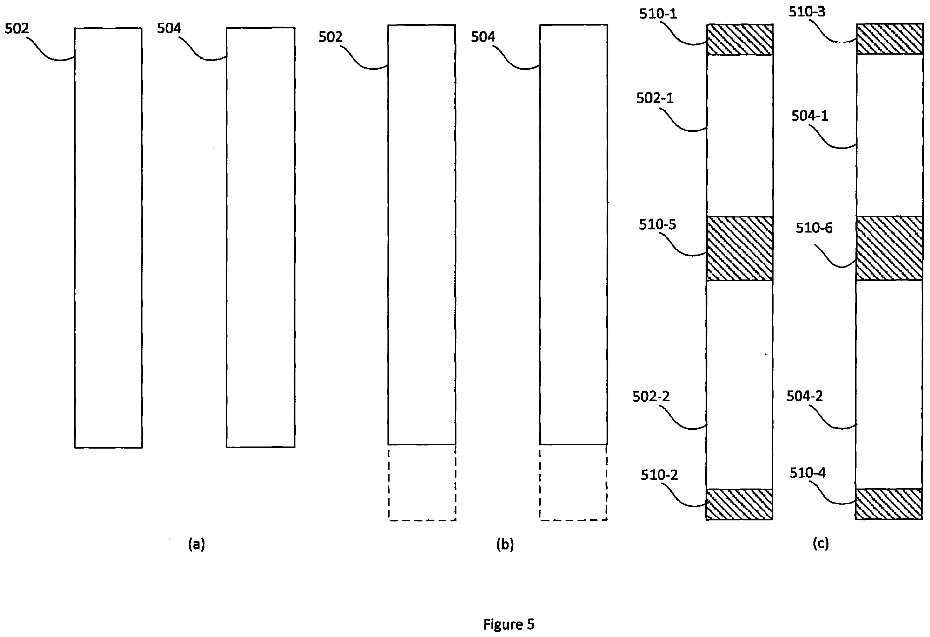

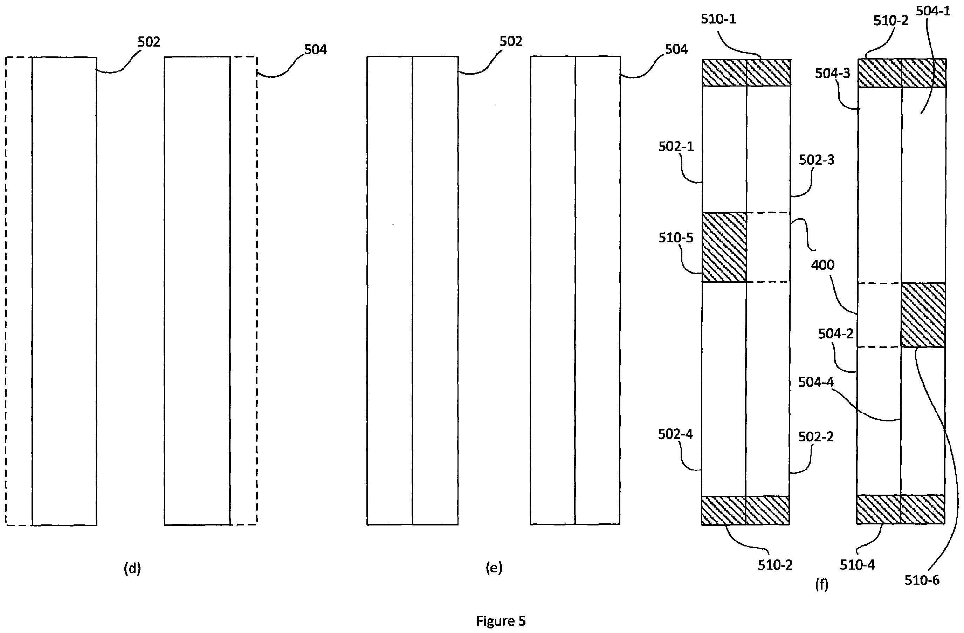

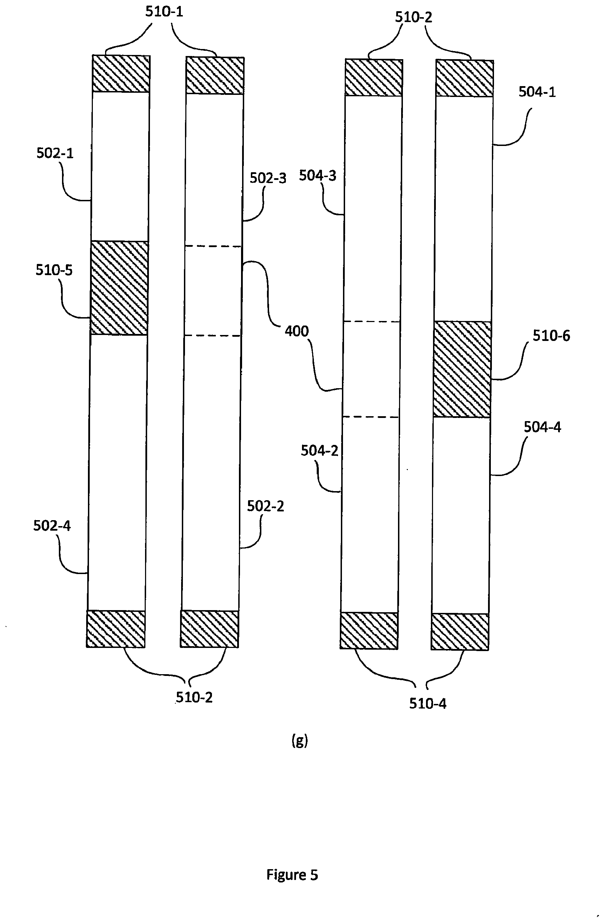

Figure 5 shows various stages of an example method of (preferably phased) expanding an airport to provide the additional capacity afforded by the arrangements shown in Figures 2 - 4 and described above. Taxiways 212, aircraft movement and other features shown in previous figures are omitted from Figure 5 for clarity.

Figure 5(a) shows an existing runway arrangement of two parallel runways 502, 504. These are both extended in length as shown in Figure 5(b). This provides the additional length needed for separate landing and take-off sections on the same runway. Notional intermediate areas 510-5, 510-6 and RESAs 510-1, 2, 3, 4 are marked on the runway in step (c) to separate the different sections 502-1, 502-2 and 504-1, 504-2, thus producing a runway arrangement as shown in Figure 2(b). The extension of each runway shown in step (b) in one example would take place one at a time to reduce interference with normal airport operations. The next step (d) is to widen the runways. This step may not be necessary on some runways which have enough width already. Again, the widening of each runway may occur one at a time to reduce interference with airport operation. The widened runways are then split into two in step (e). Notional RESAs 310-5, 6 are designated on the runways in step (f) to produce the runway arrangement shown by Figures 4 which has four sections (502/504-1,2,3,4) on each runway 502, 504.

An optional final stage of expansion is shown by step (g) where the pairs of runways are separated to provide an appropriate distance between each pair. This step may involve further widening the runway as shown in step (d) and re-marking the runway arrangement so as to provide two pairs of separated runways. In one example each pair of runways is separated between runway centrelines by a distance of between 70m - 400m, preferably between 100m - 250m, more preferably by approximately 190m. Importantly this separation can be the same as or similar to that required by regulatory or safety authorities between a parallel runway and adjacent taxiway since parallel inline sections of runway are not both in use at the same time. Thus the same regulatory requirements governing taxiways neighbouring runways are likely to apply to these pairs of runways.

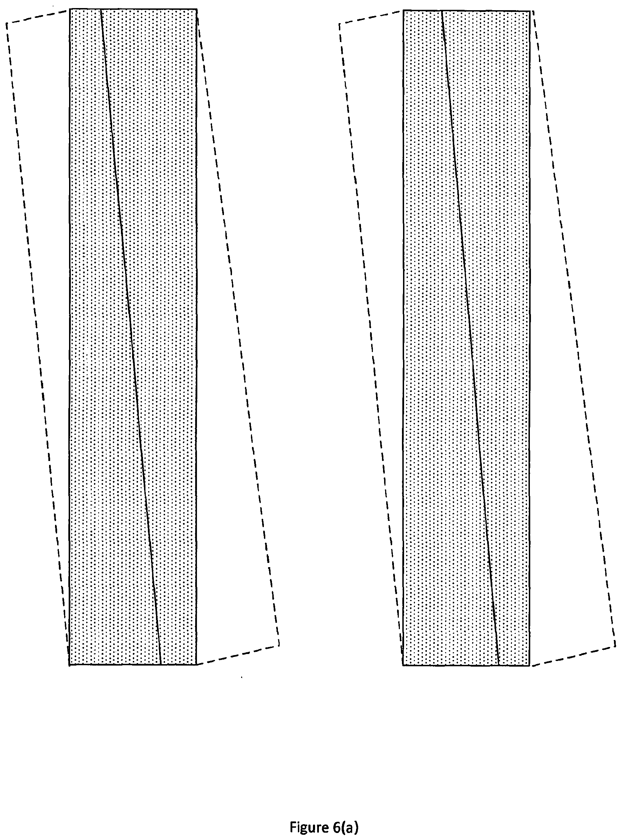

Figure 6(a) shows an alternative means of widening an existing runway to that suggested in Figures 5(d), by widening the runway more at one end than the other (adding fillets to either side of each runway), thereby changing the angle of the runways. This option may be preferable where space constraints such as buildings and taxiways mean that purely lateral extension would be onerous. A person skilled in the art would realise that a number of different runway widening or lengthening methods could be used to provide a final arrangement resembling those described above.

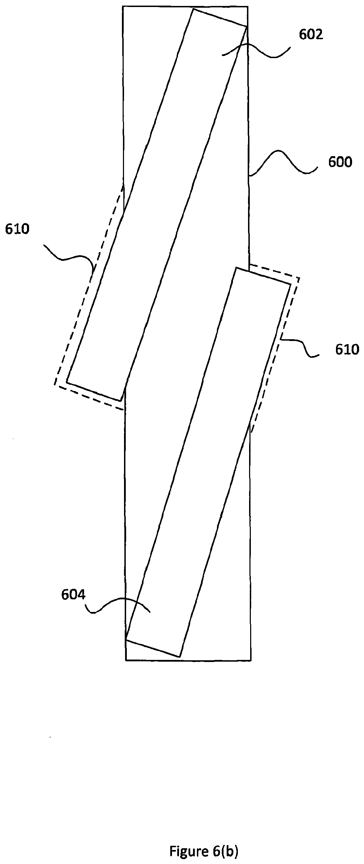

Figure 6 (b) shows another means of widening an existing runway. Two fillets 610 are added to an existing runway 600. Two new runway sections 602, 604 are then provided at an angle to the existing runway 600. This arrangement provides two runways 602, 604 with minimal extra runway needed to be constructed. The overall length of the original runway is not extended but to provide yet more runway space further extension at the ends of each runway section 602, 604 can be provided. This arrangement shows the two runway sections 602, 604 separated but depending on the size and position of fillets 610 they may be contiguous.

ILS aerials arranged at the distal ends of the angled runway sections 602, 604 are preferably available to be installed; such placement allows the aerials to be placed sufficiently close to landing aircraft, have free line-of-sight to landing aircraft and be a safe distance from departing aircraft. To improve safety, preferably fixed, but frangible ILS aerial structures are used so as to prevent damage to aircraft, for example in an aircraft landing incident. Additionally, the ILS aerial is low-lying, so as to avoid contact with aircraft wings.

Landing guidance systems, such as Ground-Based Augmentation Systems (GBAS) and Microwave Landing Systems (MLS) are preferably available to be installed alongside the aforementioned runway arrangements (in addition to or instead of ILS) in order to aid landing. Advantageously, signal interference and restrictions on placement of components of GBAS and MLS instrumentation, as observed in ILS, are overcome.

Figure 7 (a) shows an alternative method of using the runway arrangements described above. There are often restrictions on airport operations early in the morning or late at night due to the noise involved and the consequent disturbance to the surrounding population.

During times where aircraft are only landing, for example, early mornings, the whole length of one or both runways is available for incoming aircraft. Thus, aircraft can land at the distal end of any runway, thus effectively moving the noise further down the runway. This could be by several thousand metres for a long runway. Thus, the runway is effectively this extra distance further away from the local population, reducing the intensity of the noise for people along the flight path. Figure 7(a) shows points 700 where aircraft would usually land (see Figures 2 to 4 and above) relative to points 702 where aircraft can land if there are no aircraft taking off.

During times when aircraft are only taking off, for example, late evenings, the whole length of one or both runways is available for departing aircraft. Thus, aircraft can similarly start their take off from further down the runway.

Figure 7(b) shows the effect of this different landing method on a nearby population 704 a distance x away. The normal flight path 706 passes over a point directly above the population 704 at a distance d. When using the 'long landing', where the landing point is offset by a distance ∆x, the new flight path 708 is at a distance d+∆d above this same point. This distance is given by the following relationship:

$$\Delta d = \Delta x \cdot \tan \theta$$

Extending the landing point by say 2km with a descent gradient of 3° therefore means a higher flight path by around 105m. This has a significant impact on the noise levels at the ground. The further the landing point is extended, the higher the aircraft will be at a given point away from the start of the runway. This distance is limited however by the available runway length; 2km is merely an example and the distance may be greater or smaller than this depending on the runway being used.

A similar method can be used when taking off so that aircraft have climbed to a greater distance when they pass over a nearby population. In such operation, aircraft begin the take-off at an end of a runway, as opposed to nearer the middle as shown in Figures 2 to 4. Such operation would occur independently to aircraft landing.

Designation of landing thresholds and/or safety areas may comprise physical changes such as adding or removing lighting, additional runway markings (such as threshold markings) and/or alerting pilots and air-traffic controllers to the position of the safety areas, runway length and/or position, possibly using software-implemented changes such as alerting pilots and air-traffic controllers to the runway length available via a user interface. These designations may be altered by a user and/or computer system altering the active lighting and/or markings on the runway and making corresponding changes to the user interface display for the pilots and air-traffic controllers. Such a system allows flexibility in the length and/or position of the runway, direction of operation and permits long landing' to be facilitated. The full length of each runway could be used since the intermediate safety areas, as well as being flexible in location, can also be used as part of the runway if required.

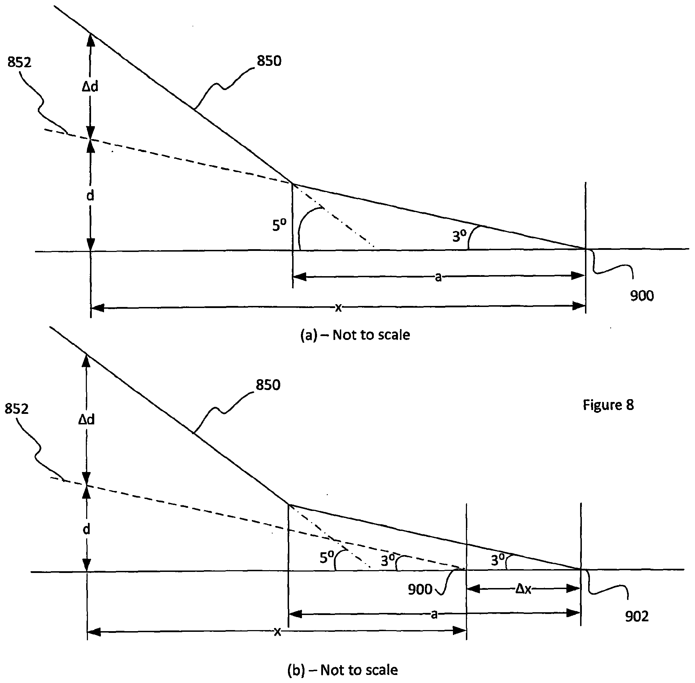

Figure 8 shows a further development of the landing approach method described above. To further reduce the effect of aircraft noise on areas near the airport, a two stage approach can be used. Rather than approaching the landing at a constant angle as shown above, the aircraft initially approaches at a steeper angle, which is changed to a shallower angle prior to landing. The use of automated procedures such as 'auto-pilot' and "microwave landing systems" can be used to make such a staged landing compared to if the aircraft were to be landed manually. Figure 8 (a) shows an example staged approach 850 as compared to a conventional approach 852. The approach angle is in this example changed from 5° to 3° at a distance 'a' from the landing point. The extra height an aircraft is at, at a distance 'x' from the landing point is given by:

$$\Delta d = (x - a) \cdot (\tan 5° - \tan 3°)$$
$$\approx 0.035 \cdot (x - a)$$

Where (x-a) is the distance the point of measurement (i.e. the population) is from the point the angle of approach changes (in km).

The combination of the 'long landing' described above and a staged descent means that the noise over a nearby population is significantly reduced; however each of these could be provided independently depending on the situation. Figure 8(b) shows an example landing utilising both the staged approach and the 'long landing' described above. The extra height an aircraft is at, at a distance 'x' from the landing point, is given by:

$$\Delta d = (x - a) \cdot (\tan 5° - \tan 3°) + \Delta x \cdot \tan 3°$$
$$\approx 0.035 \cdot (x - a) + 0.052 \cdot \Delta x$$

For a population 10km away from the usual landing point, and where the angle of approach changes 3km from landing; moving the landing point 2km further means the aircraft are around 350m higher up over the population. This extra height corresponds to a significant reduction in aircraft noise at ground level.

The angle of approach may change closer or further away than the 3km example given above. This may depend on factors such as local regulations and the precise location of the population.

The angle of approach changing from 5° to 3° is an example step change. A person skilled in the art would realise that a range of differing approach angles could be used depending on the type of aircraft, the airport, the nature of the flight etc. Furthermore, the change may not be a step change; it may be a gradual change from one approach angle to another over a significant distance.

Alternatives and modifications

Although the above description refers to many examples where an airport runway arrangement has two parallel runways, the invention extends to situations where there is a single runway. This would be particularly advantageous in an urban environment where there is only space for a single runway. Furthermore, the invention can also be applied to airports with more than one non-parallel runway. This would be particularly advantageous in order to increase passenger capacity in situations where non-parallel runways are independently used depending on wind conditions or where space constraints require runways to be non-parallel.

The above description includes numerous references to runway and airport configuration dimensions. These dimensions are merely examples and a person skilled in the art would appreciate that these are dependent on factors such as type of aircraft and the regulations covering the airport. Such modifications could be made by a person skilled in the art and therefore are within the scope of the invention.

Various other modifications will be apparent to those skilled in the art and will not be described in further detail here.

It will be understood that the present invention has been described above purely by way of example, and modifications of detail can be made within the scope of the invention.

Reference numerals appearing in the claims are by way of illustration only and shall have no limiting effect on the scope of the claims.

**Claims**

1. An airport runway arrangement for commercial aircraft, comprising:

    a first runway section (202-1);
    a second runway section (202-2) extending substantially in prolongation of the first runway section (202-1), the second runway section (202-2) having the same direction of operation as that of the first runway section (202-1); and
    an intermediate section (210-3) between the first runway section (202-1) and the second (202-2) runway section; **characterised in that** the first runway section, the second runway section and the intermediate section are designated by at least one of lights, markings and reflectors on said runway arrangement, said first runway section and said second runway section being designated as runway sections, and the intermediate section (210-3) being designated as an intermediate safety area, said designation indicating that the intermediate section is not to be used by aircraft during normal operations.

2. An airport runway arrangement according to claim 1 wherein the first runway section (202-1) is designated a landing runway section and the second runway section (202-2) is designated a take-off runway section.

3. An airport runway arrangement comprising a pair of runway arrangements each according to any of claims 1 or 2.

4. An airport runway arrangement according any of claims 1 or 2 further comprising a further runway arrangement parallel to said first (202-1) and second (202-2) runway sections.

5. An airport runway arrangement according to any preceding claim wherein each runway section is between 1000m and 4000m, preferably between 2200m and 3200m.

6. An airport runway arrangement according to any preceding claim wherein the intermediate section (210-3) is at least 200m in length, preferably between 240m and 600m in length.

7. An airport runway arrangement according to any preceding claim wherein the intermediate section (210-3) is between 300m and 1500m in length, preferably between 600m and 1500m in length.

8. An airport runway arrangement according to any preceding claim wherein the intermediate section (210-3) is between 540m and 660m in length, preferably approximately 600m in length.

9. A method of operating an airport runway arrangement for commercial aircraft, the method comprising the steps of:

directing an aircraft to move along a first runway section (202-1);
directing an aircraft to move along a second runway section (202-2), the second runway section (202-2) having the same direction of operation as that of the first runway section (202-1); and
providing an intermediate section (210-3) between the first runway section (202-1) and the second runway section (202-2);
the method being **characterised by** further comprising the steps of:

indicating, to a pilot, by at least one of lights, markings and reflectors on said runway arrangement, that said first runway section and said second runway section are runway sections, and that the intermediate section (210-3) is an intermediate safety area that is not to be used by aircraft during normal operations; and
simultaneously landing an aircraft on one of said first runway section (202-1) and said second runway section (202-2), and taking off an aircraft from the other of said first runway section (202-1) and said second runway section (202-2), whilst not using the intermediate section (210-3).

10. A method according to claim 9 wherein the step of directing an aircraft to move along a first runway section (202-1) comprises directing an aircraft to land.

11. A method according to claim 9 wherein the step of directing an aircraft to move along a second runway section (202-2) comprises directing an aircraft to take off.

12. The method of any of claims 9 to 11 using the runway of any of claims 1 to 8.

13. A system incorporating an airport runway configuration according to any of claims 1 to 8, and further comprising:

means for defining the first runway section (202-1);
means for defining the second runway section (202-2); and
means for defining the intermediate section (210-3).

14. A system incorporating an airport runway arrangement according to any of claims 1 to 8 further comprising a landing aircraft and a departing aircraft.

15. A system according to claim 14 further comprising:
means for directing, simultaneously, said landing aircraft to land on said first runway section (202-1) and directing said departing aircraft to take off from said second runway section (202-2).

16. A method of producing an airport runway arrangement according to any of claims 1 to 8, comprising expanding an existing runway arrangement to produce an airport runway arrangement according to any of claims 1 to 8.

**Patentansprüche**

1. Flughafen-Runway-Anordnung für Verkehrsflugzeuge, die Folgendes umfasst:

einen ersten Runway-Abschnitt (202-1);
einen zweiten Runway-Abschnitt (202-2), der im Wesentlichen in der Verlängerung des ersten Runway-Abschnitts (202-1) verläuft, wobei der zweite Runway-Abschnitt (202-2) dieselbe Betriebsrichtung hat wie der erste Runway-Abschnitt (202-1); und
einen Zwischenabschnitt (210-3) zwischen dem ersten Runway-Abschnitt (202-1) und dem zweiten Runway-Abschnitt (202-2) ;
**dadurch gekennzeichnet, dass** der erste Runway-Abschnitt, der zweite Runway-Abschnitt und der Zwischenabschnitt durch wenigstens eines aus Leuchten, Markierungen und Reflektoren auf der genannten Runway-Anordnung designiert sind, wobei der genannte erste Runway-Abschnitt und der genannte zweite Runway-Abschnitt als Runway-Abschnitte designiert sind und der Zwischenabschnitt (210-3) als Zwischensicherheitsbereich designiert ist, wobei die genannte Designierung anzeigt, dass der Zwischenabschnitt im Normalbetrieb nicht von Flugzeugen zu benutzen ist.

2.  Flughafen-Runway-Anordnung nach Anspruch 1, wobei der erste Runway-Abschnitt (202-1) als Lande-Runway-Abschnitt und der zweite Runway-Abschnitt (202-2) als Start-Runway-Abschnitt designiert ist.

3.  Flughafen-Runway-Anordnung, die ein Paar Runway-Anordnungen jeweils nach Anspruch 1 oder 2 umfasst.

4.  Flughafen-Runway-Anordnung nach Anspruch 1 oder 2, die ferner eine weitere Runway-Anordnung parallel zu dem genannten ersten (202-1) und zweiten (202-2) Runway-Abschnitt umfasst.

5.  Flughafen-Runway-Anordnung nach einem vorherigen Anspruch, wobei jeder Runway-Abschnitt eine Länge von 1000 m bis 4000 m, vorzugsweise von 2200 m bis 3200 m hat.

6.  Flughafen-Runway-Anordnung nach einem vorherigen Anspruch, wobei der Zwischenabschnitt (210-3) eine Länge von wenigstens 200 m, vorzugsweise von 240 m bis 600 m hat.

7.  Flughafen-Runway-Anordnung nach einem vorherigen Anspruch, wobei der Zwischenabschnitt (210-3) eine Länge von 300 m bis 1500 m, vorzugsweise von 600 m bis 1500 m hat.

8.  Flughafen-Runway-Anordnung nach einem vorherigen Anspruch, wobei der Zwischenabschnitt (210-3) eine Länge von 540 m bis 660 m, vorzugsweise von etwa 600 m hat.

9.  Verfahren zum Betreiben einer Flughafen-Runway-Anordnung für Verkehrsflugzeuge, wobei das Verfahren die folgenden Schritte beinhaltet:

    Anweisen eines Flugzeugs zum Bewegen über einen ersten Runway-Abschnitt (202-1);
    Anweisen eines Flugzeugs zum Bewegen über einen zweiten Runway-Abschnitt (202-2), wobei der zweite Runway-Abschnitt (202-2) dieselbe Betriebsrichtung hat wie der erste Runway-Abschnitt (202-1); und
    Bereitstellen eines Zwischenabschnitts (210-3) zwischen dem ersten Runway-Abschnitt (202-1) und dem zweiten Runway-Abschnitt(202-2) ;
    wobei das Verfahren **dadurch gekennzeichnet ist, dass** es ferner die folgenden Schritte beinhaltet:

    Anzeigen einem Piloten, durch wenigstens eines aus Leuchten, Markierungen und Reflektoren auf der genannten Runway-Anordnung, dass der genannte erste Runway-Abschnitt und der genannte zweite Runway-Abschnitt Runway-Abschnitte sind und dass der Zwischenabschnitt (210-3) ein Zwischensicherheitsbereich ist, der bei Normalbetrieb von Flugzeugen nicht zu benutzen ist; und
    gleichzeitiges Landen eines Flugzeugs auf einem aus dem genannten ersten Runway-Abschnitt (202-1) und dem genannten zweiten Runway-Abschnitt (202-2) und Starten eines Flugzeugs von dem anderen aus dem genannten ersten Runway-Abschnitt (202-1) und dem genannten zweiten Runway-Abschnitt (202-2), während der Zwischenabschnitt (210-3) nicht benutzt wird.

10. Verfahren nach Anspruch 9, wobei der Schritt des Anweisens eines Flugzeugs zum Bewegen über einen ersten Runway-Abschnitt (202-1) das Anweisen eines Flugzeugs zum Landen beinhaltet.

11. Verfahren nach Anspruch 9, wobei der Schritt des Anweisens eines Flugzeugs zum Bewegen über einen zweiten Runway-Abschnitt (202-2) das Anweisen eines Flugzeugs zum Starten beinhaltet.

12. Verfahren nach einem der Ansprüche 9 bis 11 unter Verwendung der Runway nach einem der Ansprüche 1 bis 8.

13. System mit einer Flughafen-Runway-Konfiguration nach einem der Ansprüche 1 bis 8, das ferner Folgendes umfasst:

    Mittel zum Definieren des ersten Runway-Abschnitts (202-1) ;
    Mittel zum Definieren des zweiten Runway-Abschnitts (202-2); und
    Mittel zum Definieren des Zwischenabschnitts (210-3).

**14.** System mit einer Flughafen-Runway-Anordnung nach einem der Ansprüche 1 bis 8, das ferner ein landendes Flugzeug und ein startendes Flugzeug umfasst.

**15.** System nach Anspruch 14, das ferner Folgendes umfasst:
Mittel zum gleichzeitigen Anweisen des genannten landenden Flugzeugs zum Landen auf dem genannten ersten Runway-Abschnitt (202-1) und des Anweisens des genannten startenden Flugzeugs zum Starten von dem genannten zweiten Runway-Abschnitt (202-2) beinhaltet.

**16.** Verfahren zum Produzieren einer Flughafen-Runway-Anordnung nach einem der Ansprüche 1 bis 8, das das Expandieren einer existierenden Runway-Anordnung zum Produzieren einer Flughafen-Runway-Anordnung nach einem der Ansprüche 1 bis 8 beinhaltet.

**Revendications**

**1.** Agencement de piste d'aéroport pour aéronef commercial, comprenant :

une première section de piste (202-1) ;
une seconde section de piste (202-2) s'étendant sensiblement dans le prolongement de la première section de piste (202-1), la seconde section de piste (202-2) ayant le même sens de fonctionnement que celui de la première section de piste (202-1) ; et
une section intermédiaire (210-3) entre la première section de piste (202-1) et la seconde section de piste (202-2) ;
**caractérisé en ce que** la première section de piste, la seconde section de piste et la section intermédiaire sont désignées par au moins l'un parmi des feux, des marquages et des réflecteurs sur ledit agencement de piste, ladite première section de piste et ladite seconde section de piste étant désignées en tant que sections de piste, et la section intermédiaire (210-3) étant désignée en tant que zone de sécurité intermédiaire, ladite désignation indiquant que la section intermédiaire ne doit pas être utilisée par les aéronefs pendant les opérations normales.

**2.** Agencement de piste d'aéroport selon la revendication 1, dans lequel la première section de piste (202-1) est désignée en tant que section de piste d'atterrissage et la seconde section de piste (202-2) est désignée en tant que section de piste de décollage.

**3.** Agencement de piste d'aéroport comprenant une paire d'agencements de piste, chacun selon l'une quelconque des revendications 1 ou 2.

**4.** Agencement de piste d'aéroport selon l'une quelconque des revendications 1 ou 2, comprenant en outre un agencement de piste supplémentaire parallèle auxdites première (202-1) et seconde (202-2) sections de piste.

**5.** Agencement de piste d'aéroport selon l'une quelconque des revendications précédentes, dans lequel chaque section de piste est comprise entre 1 000 m et 4 000 m, de préférence entre 2 200 m et 3 200 m.

**6.** Agencement de piste d'aéroport selon l'une quelconque des revendications précédentes, dans lequel la section intermédiaire (210-3) a une longueur d'au moins 200 m, de préférence une longueur comprise entre 240 et 600 m.

**7.** Agencement de piste d'aéroport selon l'une quelconque des revendications précédentes, dans lequel la section intermédiaire (210-3) a une longueur comprise entre 300 m et 1500 m, de préférence entre 600 m et 1500 m.

**8.** Agencement de piste d'aéroport selon l'une quelconque des revendications précédentes, dans lequel la section intermédiaire (210-3) a une longueur comprise entre 540 m et 660 m, de préférence une longueur d'approximativement 600 m.

**9.** Procédé de fonctionnement d'un agencement de piste d'aéroport pour aéronef commercial, le procédé comprenant les étapes consistant à :

diriger un aéronef pour qu'il se déplace le long d'une première section de piste (202-1) ;
diriger un aéronef pour qu'il se déplace le long d'une seconde section de piste (202-2), la seconde section de piste (202-2) ayant le même sens de fonctionnement que celui de la première section de piste (202-1) ; et

fournir une section intermédiaire (210-3) entre la première section de piste (202-1) et la seconde section de piste (202-2) ;

le procédé étant **caractérisé en ce qu'**il comprend en outre les étapes consistant à :

indiquer à un pilote, par au moins l'un parmi des feux, des marquages et des réflecteurs sur ledit agencement de piste, que ladite première section de piste et ladite seconde section de piste sont des sections de piste, et que la section intermédiaire (210-3) est une zone de sécurité intermédiaire qui ne doit pas être utilisée par les aéronefs pendant les opérations normales ; et

faire atterrir un avion sur l'une de ladite première section de piste (202-1) et de ladite seconde section de piste (202-2), et décoller simultanément un avion à partir de l'autre de ladite première section de piste (202-1) et de ladite seconde section de piste (202-2), sans utiliser la section intermédiaire (210-3).

10. Procédé selon la revendication 9, dans lequel l'étape consistant à diriger un avion pour qu'il se déplace le long d'une première section de piste (202-1) comprend de diriger un avion pour qu'il atterrisse.

11. Procédé selon la revendication 9, dans lequel l'étape consistant à diriger un avion pour qu'il se déplace le long d'une seconde section de piste (202-2) comprend de diriger un avion pour qu'il décolle.

12. Procédé selon l'une quelconque des revendications 9 à 11, utilisant la piste selon l'une quelconque des revendications 1 à 8.

13. Système incorporant une configuration de piste d'aéroport selon l'une quelconque des revendications 1 à 8, et comprenant en outre :

des moyens pour définir la première section de piste (202-1) ;
des moyens pour définir la seconde section de piste (202-2) ; et
des moyens pour définir la section intermédiaire (210-3) .

14. Système incorporant un agencement de piste d'aéroport selon l'une quelconque des revendications 1 à 8, comprenant en outre un aéronef à l'atterrissage et un aéronef au départ.

15. Système selon la revendication 14, comprenant en outre :
des moyens pour diriger ledit aéronef à l'atterrissage pour atterrir sur ladite première section de piste (202-1) et diriger simultanément ledit aéronef au départ pour décoller à partir de ladite seconde section de piste (202-2).

16. Procédé de production d'un agencement de piste d'aéroport selon l'une quelconque des revendications 1 à 8, comprenant d'étendre un arrangement de piste existant pour produire un agencement de piste d'aéroport selon l'une quelconque des revendications 1 à 8.

Figure 1 (prior art)

Figure 2(a)

Figure 2(b)

Figure 3(a)

Figure 3(b)

Figure 3(c)

Departing aircraft

Departing aircraft

300

310-1

310-3

302-3

304-3

310-6

Terminal

310-5

106

304-4

302-4

212

Go-around

Go-around

310-2

310-4

Landing aircraft

Landing aircraft

Figure 3(d)

Figure 4(a)

Departing aircraft - N

Landing
aircraft - S

310-1

310-2

Departing aircraft - N

Landing
aircraft - S

Go-around -
S

302-3

304-3

Go-around
- S

302-1

304-1

310-5

310-6

400

Terminal

400

106

302-2

304-2

304-4

Go-around
- N

302-4

212

Go-around
- N

Landing
aircraft - N

310-2

Figure 4(b)

Departing
aircraft - S

Landing
aircraft - N

Departing aircraft - S

310-4

Figure 5

(a)

502
504

(b)

502
504

(c)

510-1
502-1
510-5
502-2
510-2

510-3
504-1
510-6
504-2
510-4

Figure 5

(g)

Figure 5

Figure 6(a)

Figure 6(b)

Figure 7

Figure 8

(a) – Not to scale

(b) – Not to scale

**EP 2 903 896 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090043487 A1